# FASCICULE DE BREVET EUROPEEN

(11) **EP 0 937 273 B1**
(45) Date de publication et mention de la délivrance du brevet: **19.01.2005**
(21) Numéro de dépôt: 97913253.7
(22) Date de dépôt: 05.11.1997
(51) Int. Cl.: G02B 27/14, G02B 5/32

(54) **DISPOSITIF COMPACT D'ILLUMINATION**
KOMPAKTE VORRICHTUNG FÜR BELEUCHTUNG
COMPACT LIGHTING DEVICE

(30) Priorité: 05.11.1996 FR 9613455
(43) Date de publication de la demande: 25.08.1999
(73) Titulaire: Thales, 75008 Paris (FR)
(72) Inventeur: DELBOULBE, Anne, Thomson-CSF S.C.P.I., F-94117 Arcueil Cedex (FR); HUIGNARD, Jean-Pierre, Thomson-CSF S.C.P.I., F-94117 Arcueil Cedex (FR); JOUBERT, Cécile, Thomson-CSF S.C.P.I., F-94117 Arcueil Cedex (FR); LOISEAUX, Brigitte, Thomson-CSF S.C.P.I., F-94117 Arcueil Cedex (FR)
(86) Numéro de dépôt international: PCT/FR1997/001981
(87) Numéro de publication internationale: WO 1998/020384

(56) Documents cités:
- EP-A- 0 572 292
- EP-A- 0 676 902
- US-A- 4 087 162
- US-A- 4 629 288

## Description

Le domaine de l'invention est celui des dispositifs d'illumination et plus précisément celui des dispositif d'illumination trichrome adapté à l'éclairage d'écran LCD.

A l'heure actuelle de nombreuses applications en visualisation nécessitent de disposer de dispositifs d'illumination compacts et légers, permettant d'éclairer aussi bien des écrans de petite taille que des écrans de très grandes dimensions (surface supérieure au mètre carré).

Pour certaines applications, l'optimisation des paramètres, compacité, efficacité lumineuse et contraste constitue un besoin majeur et notamment dans des applications telles que les imageurs ultra-légers pour visuel de casque en avionique ou bien encore pour des écrans plats muraux de télévision de grande taille typiquement 5 cm de profondeur pour une image de 1 mètre de diagonale, fonctionnant en vision directe.

En effet, les solutions actuelles pour imageur de casque sont basées sur l'utilisation de mini-tubes CRT monochromes, cependant la présentation d'images trichromes dans ces applications constitue un besoin impératif à condition d'être en mesure de satisfaire simultanément aux critères de compacité-poids et de luminosité. Avec les techniques actuelles, l'utilisation d'un écran LCD présente un avantage certain sur le plan compacité-poids, néanmoins de nouvelles solutions d'éclairage doivent être envisagées pour assurer une luminance suffisante permettant de présenter à l'utilisateur une image de contraste suffisant (typiquement supérieur à 5), en particulier lorsqu'il évolue dans une ambiance lumineuse élevée (pilote en mission de jour).

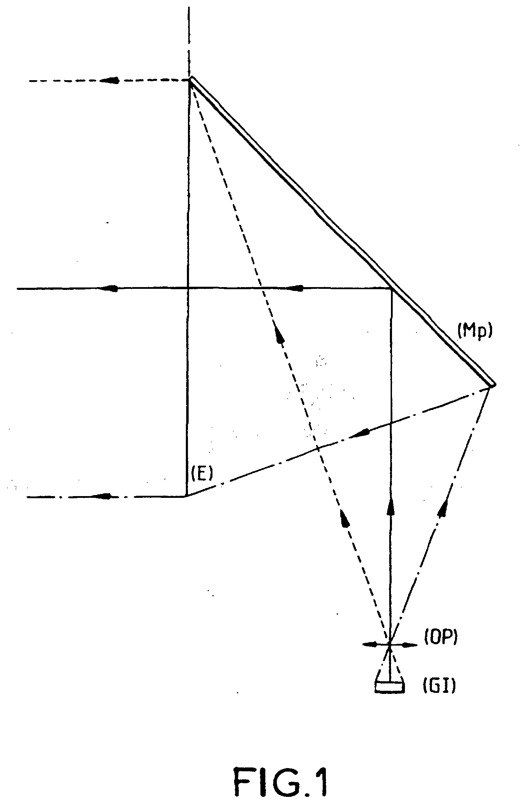

De la même manière, dans les applications d'écran de télévision de grandes dimensions, les solutions LCD actuellement mises en oeuvre sont basées sur des techniques de projection qui conduisent à une profondeur non négligeable de 20 à 40 cm dans des formats d'image de l'ordre de 1 mètre de diagonale. A titre d'exemple, la figure 1 illustre un exemple de dispositif de visualisation utilisant un générateur d'image GI comprenant notamment une source et une matrice active, une optique de projection OP et un miroir de renvoi Mp, en direction de l'écran E, l'ensemble constituant un dispositif encombrant. Une alternative consisterait à utiliser des écrans LCD en vision directe, basée sur une technologie spécifique compatible avec un adressage à cadence vidéo, l'adressage de pixels de grandes tailles étant plus difficile à réaliser en raison des capacités importantes, inhérentes de pixels électrooptiques de grandes tailles. Les grands écrans présentent l'intérêt de pouvoir s'affranchir d'optique de projection, mais à l'heure actuelle, les dispositif de rétro-éclairage à base de tubes fluorescents développés pour les applications informatiques ne présentent pas les caractéristiques de luminance et de contraste, requises pour la présentation d'une image vidéo satisfaisante dans le domaine grand public.

Pour pallier ces différents inconvénients, l'invention a pour objet un dispositif compact d'illumination mettant en oeuvre des moyens originaux d'anamorphose pour adapter l'étendue d'une source à l'illumination d'un format d'écran, compatible avec une structure compacte de visualisation dont la profondeur est très faible par rapport à la section de l'illumination.

Les caractéristique techniques qui figurent dans le préambule de la revendication 1, font partie de EP-A 572 292. La technique antérieure qui est indiquée dans EP-A 572 292 est, entre autre, reflétée par un document publié FR-A 2 669 744. Ce dernier expose, entre autre, un dispositif holographique de focalisation étant enregistré pour focaliser les différentes longueurs d'ondes correspondant à différentes couleurs selon des directions différentes. Les miroirs holographiques ont, selon EP-A 572 292, une autre propriété connue, qui est d'être sélectifs en longueur d'ondes. Par exemple, a l'aide de trois hologrammes enregistrés avec des lasers rouge, vert et bleu, on peut fabriquer un système optique qui sépare les trois couleurs primaires généralement utilisées à la visualisation d'images.

Lorsque le composant diffractif de EP-A 572 292 fonctionne en reflexion deux résaux holographique sont alors nécessaire pour assurer la fonction de séparation angulaire trichrome par interception d'un flux collimaté.

Plus précisément, l'invention a pour objet un dispositif compact d'illumination selon la revendication 1.

Selon une variante, le composant optique M₁ est un composant réfléchissant, incliné d'un angle θ₁ par rapport à la direction D_{y}.

Ce composant optique M₁ peut avantageusement être constitué de micro prismes faisant chacun un angle d'environ 45 avec la direction D_{y}. Ce composant optique M₁ peut également avantageusement être un composant diffractif constitué de micro-strates d'indice, inclinées à environ 45° avec la direction D_{y}. Dans le cas d'illumination trichrome destinée à l'éclairage d'écran couleur, le composant M₁ peut avantageusement comprendre la superposition de trois réseaux holographiques, réfléchissant respectivement le rouge, le vert et le bleu ; ces trois réseaux peuvent être inscrits dans une couche unique ou dans plusieurs couches de matériaux photosensibles. De plus, les micro-strates d'indice peuvent conférer au réseau une fonction de séparation chromatique, par dispersion angulaire des couleurs rouge, vert, bleu, mais cela ne concerne qu'un élément qui ne fait pas l'objet de la protection demandée. Pour réaliser cette fonction le composant M₁ peut comprendre la superposition d'au moins deux réseaux holographiques dont le pas et l'orientation des strates (voisines de 45° par rapport à D_{y}) sont adaptées à la dispersion selon une direction donnée (voisine de la direction Dₓ) des couleurs rouge, vert, bleu. En effet, deux réseaux peuvent suffire dans la mesure où un premier réseau disperse beaucoup dans le rouge et un peu dans le vert, un second réseau dispersant beaucoup dans le bleu et un peu dans le vert, l'ensemble dispersant suffisamment dans le rouge, dans le vert et dans le bleu.

Selon une variante, le composé optique M₂ est un composant fonctionnant en réflexion, incliné d'un angle θ₂ par rapport à la direction Dₓ sensiblement perpendiculaire aux directions D_{y} et D_{z}, mais cela ne concerne qu'un élément qui ne fait pas l'objet de la protection demandée.

Il peut avantageusement comprendre des micro-prismes faisant chacun un angle d'environ 45° avec la direction Dₓ ou comprendre des micro-strates d'indice, inclinées à environ 45° de la direction Dₓ, mais cela ne concerne qu'un élément qui ne fait pas l'objet de la protection demandée.

Lorsque le composant M₂ est un composant de type réseau holographique diffractif, il peut diffracter les couleurs rouge, vert, bleu et ce, qu'il fonctionne en réflexion ou en transmission. Lorsque le composant M₂ fonctionne en réflexion, il peut être analogue au composant holographique M₁ et être constitué d'au moins deux réseaux holographiques de pas et d'orientation de strates donnée pour disperser la lumière selon des directions différentes et ainsi assurer une fonction de dispersion chromatique, mais cela ne concerne qu'un élément qui ne fait pas l'objet de la protection demandée.

Lorsque le composant M₂ fonctionne en transmission la fonction de dispersion est beaucoup mieux assurée qu'en réflexion et un unique réseau holographique peut suffire à assurer la dispersion chromatique angulaire.

C'est pourquoi, l'invention a pour objet un dispositif compact d'illumination dans lequel le composant optique M₂ est un composant diffractif, fonctionnant en transmission pouvant être incliné d'un angle θ₂ par rapport à la direction Dₓ ou parallèle à la direction Dₓ. Cette dernière configuration peut être particulièrement compacte lorsque le dispositif est intégré dans un dispositif de visualisation trichrome, le composant M₂ peut être constitué d'un réseau de lentilles holographiques accolées à une matrice active. Dans ce cas le composant M₂ assure plusieurs fonctions :
- l'anamorphose selon la direction Dₓ ;
- la séparation chromatique ;
- la focalisation dans les pixels de la matrice active.

L'invention sera mieux comprise et d'autres avantages apparaîtront à la lecture de la description qui va suivre donnée à titre non limitatif et grâce aux figures annexées parmi lesquelles :
- la figure 1 illustre un exemple de dispositif de visualisation comprenant un dispositif d'illumination selon l'art connu ;
- la figure 2 illustre un premier exemple de dispositif d'illumination ;
- la figure 3 illustre un premier exemple de composant anamorphoseur M₁ ou M₂ pouvant être utilisé dans un dispositif d'illumination ;
- la figure 4 illustre un second exemple de composant anamorphoseur M₁ ou M₂ de type miroir holographique pouvant être utilisé dans un dispositif d'illumination;
- la figure 5 illustre le principe d'enregistrement du miroir holographique selon la figure 4 ;
- la figure 6 illustre un exemple de matrice active pouvant être utilisée dans un dispositif de visualisation comprenant un dispositif d'illumination ;
- la figure 7 illustre un exemple de matrice active pouvant être utilisée dans un dispositif de visualisation trichrome, comprenant un dispositif d'illumination;
- la figure 8 illustre un exemple de dispositif de visualisation utilisant un dispositif d'illumination.

Le dispositif compact d'illumination selon l'invention comprend de manière générale :
- une source de lumière qui peut être monochrome ou trichrome ;
- un dispositif de collimation de la lumière ;
- deux composants optiques M₁ et M₂ assurant l'anamorphose de l'éclairage issu de la source et des moyens de collimation, l'un selon une direction verticale et l'autre selon une direction horizontale.

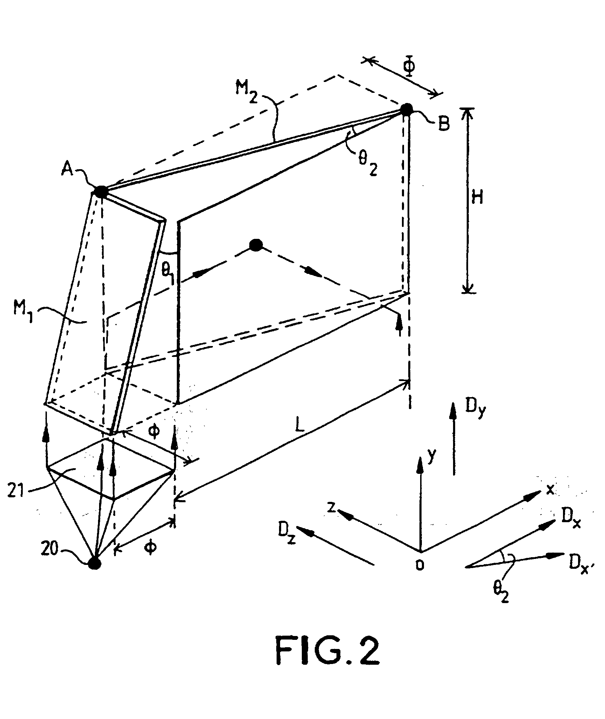

La figure 2 illustre une première exemple dans laquelle une source 20 délivre un faisceau incident qui est collimaté par une lentille 21. Le diamètre φ de la lentille est déterminant pour la profondeur du dispositif comme représenté sur cette figure. Dans cette configuration, le composant optique M₁ est réfléchissant et possède une structure permettant d'étaler spatialement le faisceau suivant une seule direction, en l'occurrence selon la direction verticale D_{y}.

Le composant M₂ intercepte le faisceau ainsi étalé pour le réfléchir selon la direction D_{z'} perpendiculaire au plan image défini par les directions D_{x'} et D_{y}, la direction D_{x'} faisant un angle θ₂ avec la direction Dₓ.

Pour intercepter tout le flux lumineux collimaté, le composant M₁ fait un angle θ₁ avec la direction D_{y}, plus précisément le plan du composant M₁ fait un angle θ₁ avec le plan défini par les directions D_{z} et D_{y}.

De même, le plan du composant optique M₂ fait un angle θ₂ avec le plan défini par les directions Dₓ et D_{y} pour intercepter le flux lumineux réfléchi par le composant optique M₁.

Comme l'illustre la figure 2, les dimensions de la zone d'éclairement ou plan image de la source sont définies par les paramètres L et H. Dans le cas d'une pupille de section φ x φ, on a H = φ cotg θ₁ et L = φ cotg θ₂.

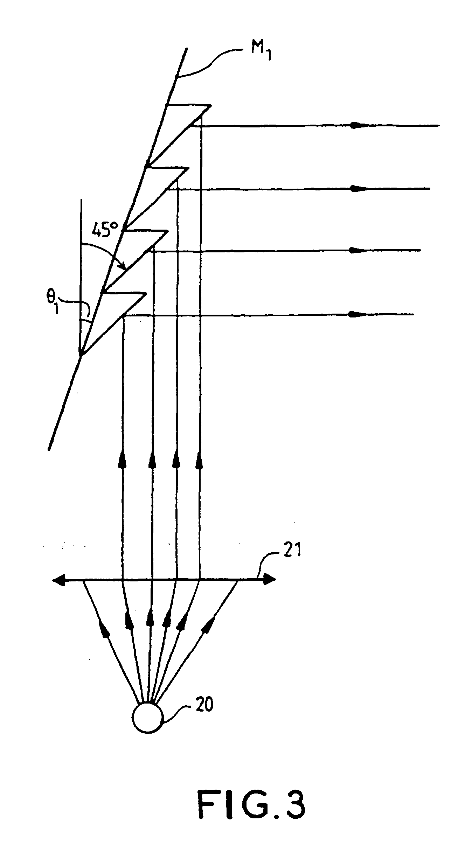

La figure 3 schématise un premier exemple de composant réfléchissant anamorphoseur. Il s'agit d'un composant anamorphoseur non diffractif et constitué de micro-prismes positionnés à 45° par rapport au faisceau incident d'angle 45°, métallisés pour assurer la fonction de réflexion.

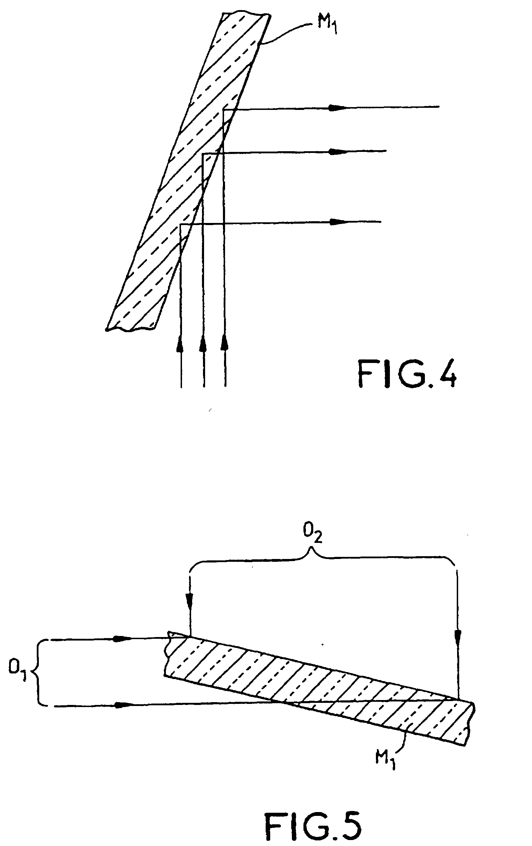

La figure 4 schématise un deuxième exemple de composant anamorphoseur de type miroir holographique. Il est constitué par un réseau enregistré dans un matériau photosensible de type photopolymère. Un principe d'enregistrement du composant est donné en figure 5. Il s'agit de réaliser l'interférence de deux ondes planes 0₁ et 0₂, au sein du volume du matériau constitutif du composant anamorphoseur, pour réaliser des strates d'indices en volume dans ledit matériau. Après relecture par une onde plane à une longueur d'onde λ_{O} et dans la bande spectrale de fonctionnement, le réseau ainsi réalisé permet d'étaler le faisceau collimaté sur la hauteur H de la surface que l'on cherche à éclairer, avec H = φ cotg θ₁.

Lorsque l'on envisage un fonctionnement trichrome aux trois longueurs d'ondes moyennes primaires rouge, vert, bleu les filtres colorés classiquement utilisés peuvent être remplacés par le composant optique M₁. Plus précisément, le composant M₁ peut être réalisé en enregistrant la fonction d'anamorphose dans un film constitué de la superposition de trois couches sensibilisées respectivement dans le rouge, dans le vert et dans le bleu ou par la superposition dans un film unique de trois fonctions d'anamorphose chacune étant adaptée à une bande spectrale.

L'obtention d'un éclairage collimaté dans la direction perpendiculaire Dₓ est assurée par le second composant anamorphoseur M₂ comme indiqué sur la figure 2. Ce composant renvoie les rayons incidents dans une direction D_{z'} perpendiculaire au plan défini par les directions D_{y} et D_{x'}. Dans le cas d'un écran de type LCD, il est possible d'ajuster exactement la direction d'éclairage et celle de meilleur contraste du LCD (correspondant à un angle d'environ 4 degrés par rapport à la normale au plan du LCD).

Typiquement, le composant optique M₂ peut être l'un de ceux représentés en figures 3 ou 4.

Dans le cas où M₁ n'assure pas la fonction de séparation chromatique, alors avantageusement, le composant optique M₂ peut également assurer une fonction de séparation angulaire chromatique, par dispersion angulaire des composantes spectrales. Lorsqu'il fonctionne en réflexion, le composant M₂ comprend au moins deux réseaux holographiques dont les strates d'indice sont judicieusement orientées par rapport à une direction moyenne de 45° par rapport à la direction D_{y} pour disperser suffisamment les trois composantes spectrales rouge, vert, bleu. Lorsque le composant M₂ fonctionne en transmission, son efficacité de dispersion est plus élevée et un seul réseau d'indice peut suffire pour réaliser la dispersion des trois couleurs rouge, vert, bleu.

L'utilisation d'un composant anamorphoseur capable d'assurer une fonction de séparation chromatique permet de supprimer l'emploi des filtres colorés généralement utilisés dans des dispositifs de visualisation.

Nous allons décrire des exemples de dispositifs de visualisation pour lesquels le dispositif d'illumination selon l'invention est particulièrement intéressant.

D'une manière générale, l'éclairage collimaté compact précédemment décrit peut être destiné par exemple à l'illumination d'un écran à matrice active, qui peut être positionné directement en sortie du dispositif d'illumination.

Cependant les écrans LCD, de part la structure de la matrice active présente une faible surface utile. Pour améliorer la luminance de l'image LCD, il est connu d'utiliser une matrice de lentilles qui focalise l'éclairage incident dans la zone transparente du pixel. Pour être avantageuses, ces situations nécessitent de disposer d'un éclairage particulièrement collimaté pour que l'image de la source formée au foyer de chacune des lentilles et située dans la couche de cristal liquide, soit adaptée à la surface utile du pixel. Le dispositif d'illumination proposé dans l'invention est particulièrement avantageux pour exploiter ces techniques, notamment dans le cas d'applications utilisant des micro-lentilles de caractéristiques standard (typiquement une focale de quelques millimètres et une pupille de l'ordre de 100 µm) qui permettent d'exploiter l'ensemble du flux émis par la source.

### Application vidéo de grande dimension

Le dispositif d'illumination compact selon l'invention peut dans ce cas présenter les caractéristiques suivantes :
- une source type lampe à arc court, par exemple une lampe à halogénures métalliques de faible étendue géométrique correspondant à un arc d'environ 1 mm ;
- une lentille de collimation de la lampe à arc court de focale f = 100 mm et de diamètre φ = 50 mm
- deux composants optiques anamorphoseurs M₁ et M₂ comprenant des réseaux holographiques inscrits dans une couche d'épaisseur voisine de 10 µm dans un matériau photosensible.

Le dispositif d'illumination fournit un éclairage collimaté dans les directions Dₓ et D_{y} sur une surface H x L, pouvant typiquement être adapté à une taille d'écran de 800 x 600 mm².

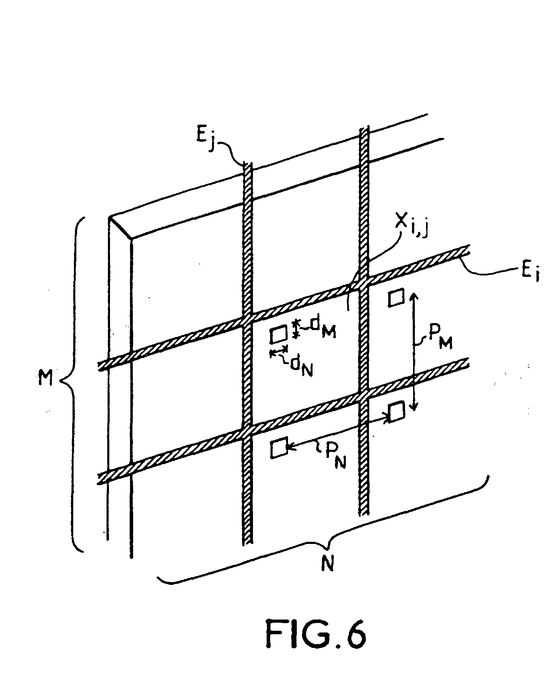

Les dimensions H et L sont déterminées par les paramètres φ diamètre de la lentille de collimation et les angles θ₁ et θ₂ dont sont inclinés les composants M₁ et M₂. La matrice cristal liquide de grandes dimensions peut avantageusement comprendre des petits pixels élémentaires de dimensions voisines de 60 µm x 60 µm répartis selon un pas de l'ordre de 1 mm comme illustré en figure 6. Avec des pixels cristal liquide de petites tailles (typiquement 60 µm x 60 µm) on s'affranchit des problèmes d'adressage à la cadence vidéo (typiquement on cherche à l'heure actuelle à adresser l'ensemble des points d'une ligne d'environ 800 pts, en 60 µs). Pour accroître l'efficacité d'illumination, il suffit de prévoir un réseau de micro-lentilles R₁ compris entre le dispositif d'illumination et la matrice active, pour focaliser l'éclairage collimaté sur chaque pixel élémentaire. Le réseau de lentilles peut être rapporté sur la face arrière de la matrice ou directement réalisé en face arrière par moulage notamment, le tirage des lentilles pouvant être comparable à l'épaisseur de la matrice active, de manière à disposer d'un ensemble réseau R₁ de lentilles/matrice active, très compact (typiquement, le tirage des lentilles peut être de l'ordre de 6 mm, et le pas des lentilles voisin du millimètre).

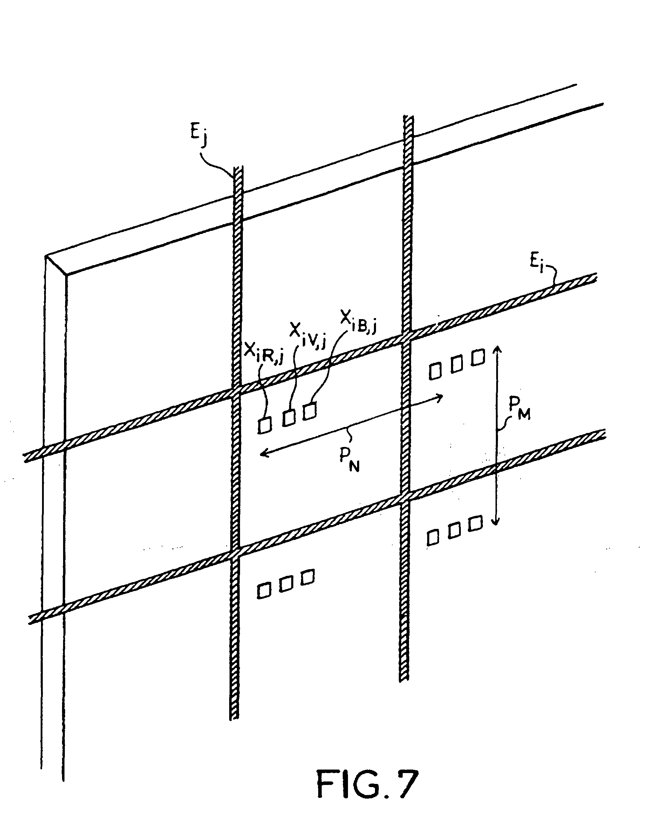

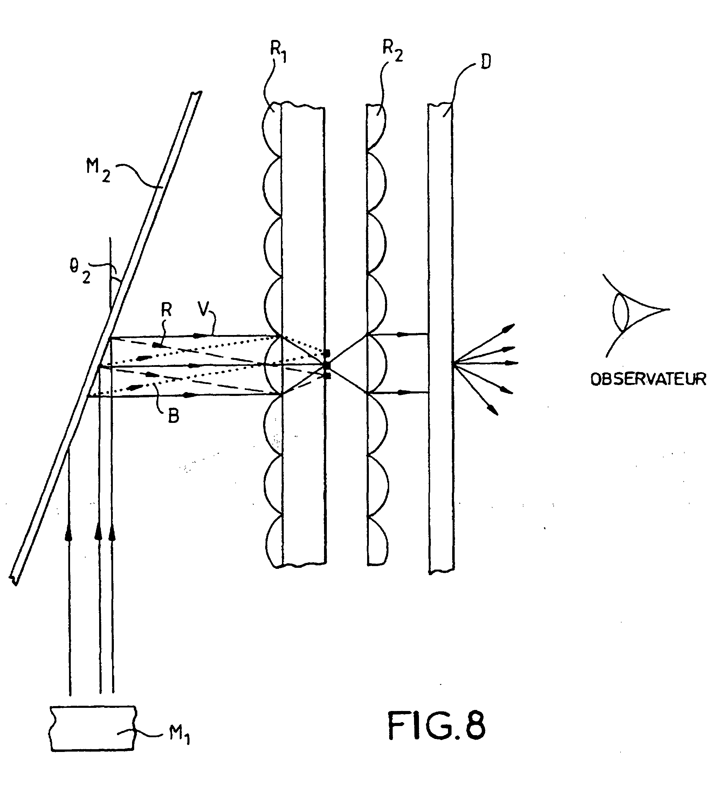

La configuration adoptée de matrice active peut à titre d'exemple, être du type de celle représentée en figure 7. Dans le cas de dispositif de visualisation trichrome, chaque point blanc est constitué d'une triade de sous pixels élémentaires, rouge, vert, bleu. Dans ce type d'architecture trichrome le pas du réseau de lentilles est du même ordre de grandeur que te pas des triades. La figure 8 illustre un exemple de dispositif de visualisation. En sortie de la matrice active un second réseau de micro-lentilles R₂ génère un faisceau dont l'intensité a été modulée par chaque pixel élémentaire en fonction des signaux électriques appliqués. Ce faisceau collimaté en direction d'un observateur peut être diffusé par un diffuseur D, de manière à adapter le diagramme de rayonnement du dispositif de visualisation.

Dans la variante précédemment décrite le réseau de lentilles R₁ et la matrice active sont placées dans le plan défini par les directions (Dₓ, D_{y}).

Selon une autre variante de l'invention, le dispositif de visualisation peut être rendu encore plus compact en positionnant le composant optique M₂ et la matrice active dans le même plan défini par les directions D_{x'} et D_{y}, la direction D_{x'} faisant un angle θ₂ avec la direction Dₓ. Dans cette configuration, le composant M₂ est un composant diffractif fonctionnant en transmission. Le réseau de lentilles R₁ peut être intégré au composant M₂, en réalisant un réseau de lentilles holographiques en transmission, inscrites par interférence d'une onde plane et d'une onde sphérique.

### Application visuel de casque

Il s'agit de réaliser un dispositif de visualisation très léger et très compact pouvant être intégré dans un casque. Pour cela, le dispositif d'illumination peut comprendre une source laser solide dont l'étendue géométrique est très faible (inférieure à 1 mm².sr), permettant la focalisation de la source laser dans des pixels de très petites tailles (environ 20 µm x 20 µm) avec des matrices de micro-lentilles situées sur la contre-lame de la matrice LCD.

Ces conditions d'utilisation permettent de réaliser des afficheurs à très haute résolution et compte tenu de la taille réduite de ces dispositifs, les puissances des sources laser mises en jeu sont faibles (de l'ordre de 10 mW).

## Revendications

1. Dispositif compact d'illumination trichrome destiné à l'éclairage d'écran couleur, comprenant: au moins une source et des moyens de collimation pour délivrer une direction d'éclairement de la source suivant une direction dite verticale (D_{y}), et comprenant en outre
- un composant optique (M₁) fonctionnant en réflexion et assurant l'anamorphose de l'éclairage dans une direction sensiblement parallèle à la direction dite verticale,
- un composant optique (M₂) fonctionnant en transmission et assurant l'anamorphose de l'éclairage dans une direction dite horizontale (D_{z}) sensiblement perpendiculaire à la direction dite verticale, de manière à adapter l'étendue de la source à l'illumination d'un format rectangulaire,
- ledit composant fonctionnant en transmission et assurant également une fonction de séparation angulaire chromatique .

2. Dispositif compact d'illumination selon la revendication 1, **caractérisé en ce que** le composant optique (M₁) réfléchissant est incliné d'un angle θ₁ par rapport à la direction (D_{y}).

3. Dispositif compact d'illumination selon la revendication 2, **caractérisé en ce que** le composant optique (M₁) fonctionnant en réflexion est constitué de micro prismes chacun faisant un angle d'environ 45° avec la direction (D_{y}).

4. Dispositif compact d'illumination selon la revendication 2, **caractérisé en ce que** le composant optique (M₁) fonctionnant en réflexion est constitué de micro strates d'indices inclinées à environ 45° avec la direction (D_{y}).

5. Dispositif compact d'illumination selon l'une des revendications 1 à 4, **caractérisé en ce que** le composant optique (M₂) est un composant fonctionnant en transmission, diffractif parallèle à la direction dite verticale (D_{X}).

6. Dispositif compact d'illumination trichrome selon la revendication 5, **caractérisé en ce que** le composant optique (M₂) comprend un réseau de micro-strates d'indice capable de disperser le rouge selon une direction θ_{R}, le vert selon une direction θ_{V} et le bleu selon une direction θ_{B}.

7. Dispositif compact d'illumination selon la revendication 6, **caractérisé en ce que** le composant diffractif (M₂), fonctionnant en transmission est constitué d'un réseau de lentilles holographiques.

8. Dispositif de visualisation comprenant un modulateur spatial de lumière et un dispositif compact d'illumination selon l'une des revendications 1 à 7, pour éclairer ledit modulateur spatial de lumière.

9. Dispositif de visualisation trichrome selon les revendications 7 et 8, **caractérisé en ce que** le composant optique (M₂) diffractif est superposé au modulateur spatial de lumière.

## Claims

1. Compact trichromatic illumination device intended for lighting a colour screen, comprising: at least one source and collimating means in order to deliver a lighting direction from the source along a so-called vertical direction (D_{y}), and also comprising
- an optical component (M₁) operating in reflection which anamorphoses the lighting in a direction approximately parallel to the so-called vertical direction;
- an optical component (M₂) of the diffraction grating type operating in transmission which anamorphoses the lighting in a so-called horizontal direction (D_{z}) approximately perpendicular to the so-called vertical direction so as to adapt the extent of the source to the illumination of a rectangular format;
- the said component operating in transmission and also providing a trichromatic angular colour-splitting function, **characterized in that** the said grating, operating in transmission and providing the trichromatic splitting function, transmits the anamorphosed illumination from the optical component (M₁) operating in reflection.

2. Compact illumination device according to Claim 1, **characterized in that** the reflective optical component (M₁) is inclined at an angle θ₁ with respect to the so-called vertical direction (D_{y}).

3. Compact illumination device according to Claim 2, **characterized in that** the optical component (M₁) operating in reflection consists of microprisms, each making an angle of approximately 45° with the so-called vertical direction (D_{y}).

4. Compact illumination device according to Claim 2, **characterized in that** the optical component (M₁) operating in reflection consists of index microstrata inclined at approximately 45° with the so-called vertical direction (D_{y}).

5. Compact illumination device according to any one of Claims 1 to 4, **characterized in that** the optical component (M₂) is a diffractive component operating in transmission, parallel to the so-called vertical direction (Dₓ).

6. Compact trichromatic illumination device according to Claim 5, **characterized in that** the optical component (M₂) comprises a grating of index microstrata, capable of causing dispersion of the red along a direction θ_{R}, the green along a direction θ_{V} and the blue along a direction θ_{B}.

7. Compact illumination device according to Claim 6, **characterized in that** the diffractive component (M₂), operating in transmission, consists of an array of holographic lenses.

8. Display device comprising a spatial light modulator and a compact illumination device according to one of Claims 1 to 7 in order to illuminate the said spatial light modulator.

9. Trichromatic display device according to Claims 7 and 8, **characterized in that** the diffractive optical component (M₂) is superimposed on the spatial light modulator.

## Patentansprüche

1. Kompakte trichromatische Beleuchtungsvorrichtung, die zur Beleuchtung eines Farbbildschirms bestimmt ist und aufweist: mindestens eine Quelle und Kollimationsmittel, um eine Beleuchtungsrichtung der Quelle in einer sogenannten senkrechten Richtung (D_{y}) zu liefern, und die weiter aufweist:
- ein optisches Bauteil (M₁), das im Reflexionsmodus arbeitet und die Anamorphose der Beleuchtung in einer Richtung im Wesentlichen parallel zur sogenannten senkrechten Richtung gewährleistet,
- ein optisches Bauteil (M₂) vom Typ Beugungsgitter, das im Übertragungsmodus arbeitet und die Anamorphose der Beleuchtung in einer sogenannten waagrechten Richtung (D_{z}) im Wesentlichen lotrecht zur sogenannten senkrechten Richtung gewährleistet, um die Reichweite der Quelle an die Beleuchtung eines rechteckigen Formats anzupassen,
- wobei das im Übertragungsmodus arbeitende Bauteil auch eine Funktion der trichromatischen Winkeltrennung gewährleistet dadruch gekennzeichnet, dass das im Übertragungsmodus arbeitende und die Funktion der trichromatischen Trennung gewährleistende Gitter die anamorphosierte Beleuchtung des im Reflexionsmodus arbeitenden optischen Bauteils (M₁) überträgt.

2. Kompakte Beleuchtungsvorrichtung nach Anspruch 1, **dadurch gekennzeichnet, dass** das im Reflexionsmodus arbeitende optische Bauteil (M₁) um einen Winkel θ₁ zur sogenannten senkrechten Richtung (D_{y}) geneigt ist.

3. Kompakte Beleuchtungsvorrichtung nach Anspruch 2, **dadurch gekennzeichnet, dass** das im Reflexionsmodus arbeitende optische Bauteil (M₁) aus Mikroprismen besteht, die je einen Winkel von etwa 45° mit der sogenannten senktechten Richtung (D_{y}) bilden.

4. Kompakte Beleuchtungsvorrichtung nach Anspruch 2, **dadurch gekennzeichnet, dass** das im Reflexionsmodus arbeitende optische Bauteil (M₁) aus Mikro-Indexschichten besteht, die um etwa 45° zur sogenannten senktechten Richtung (D_{y}) geneigt sind.

5. Kompakte Beleuchtungsvorrichtung nach einem der Ansprüche 1 bis 4, **dadurch gekennzeichnet, dass** das optische Bauteil (M₂) ein Bauteil ist, das im Übertragungsmodus diffraktiv-parallel zur sogenannten senkrechten Richtung (Dₓ) arbeitet.

6. Kompakte trichromatische Beleuchtungsvorrichtung nach Anspruch 5, **dadurch gekennzeichnet, dass** das optische Bauteil (M₂) ein Gitter von Mikro-Indexschichten aufweist, das in der Lage ist, das Rot in einer Richtung θ_{R}, das Grün in einer Richtung θ_{V} und das Blau in einer Richtung θ_{B} zu streuen.

7. Kompakte Beleuchtungsvorrichtung nach Anspruch 6, **dadurch gekennzeichnet, dass** das im Übertragungsmodus arbeitende diffraktive Bauteil (M₂) aus einem Gitter von holographischen Linsen besteht.

8. Anzeigevorrichtung, die einen räumlichen Lichtmodulator und eine kompakte Beleuchtungsvorrichtung nach einem der Ansprüche 1 bis 7 aufweist, um den räumlichen Lichtmodulator zu beleuchten.

9. Trichromatische Anzeigevorrichtung nach den Ansprüchen 7 und 8, **dadurch gekennzeichnet, dass** das diffraktive optische Bauteil (M₂) dem räumlichen Lichtmodulator überlagert ist.
